Europäisches Patentamt

European Patent Office

Office européen des brevets

(11) Publication number: **0 365 001**
**A2**

# EUROPEAN PATENT APPLICATION

(21) Application number: **89119413.6**

(51) Int. Cl.⁵: **G05B 19/405 , G05B 19/41**

(22) Date of filing: **19.10.89**

(30) Priority: **20.10.88 JP 265498/88**
**26.08.89 JP 219261/89**

(43) Date of publication of application:
**25.04.90 Bulletin 90/17**

(84) Designated Contracting States:
**AT BE CH DE ES FR GB GR IT LI LU NL SE**

(71) Applicant: **Madokoro, Yoichi**
**1-913, 20, Shiginonishi 2-Chome Joto-ku**
**Osaka-shi Osaka, 536(JP)**

Applicant: **Ono, Yukio**
**9-20, Hidenin Tennoji-ku**
**Osaka-shi Osaka, 543(JP)**

(72) Inventor: **Madokoro, Yoichi**
**1-913, 20, Shiginonishi 2-Chome Joto-ku**
**Osaka-shi Osaka, 536(JP)**
Inventor: **Ono, Yukio**
**9-20, Hidenin Tennoji-ku**
**Osaka-shi Osaka, 543(JP)**

(74) Representative: **Glawe, Delfs, Moll & Partner**
**Patentanwälte**
**Postfach 26 01 62 Liebherrstrasse 20**
**D-8000 München 26(DE)**

(54) **Method and apparatus for the three-dimensional processing.**

(57) A method for the three-dimensional processing wherein two-dimensional information is stored in a memory so as to subject a workpiece to the mechanical three-dimensional processing including the X-, the Y- and the Z-axes meeting at right angles to one another. An apparatus for subjecting a workpiece to the mechanical three-dimensional processing including the X-, the Y- and the Z-axes meeting at right angles to one another, which comprises a machine tool having motors for moving a cutter and a work rest relatively in the directions of the X-, the Y- and the Z-axes. The apparatus further comprises a controller which stores two-dimensional information on two axes corresponding to each point on the other axis and controls the motors based on the stored information to move the cutter and the work rest in the directions of the X-, the Y- and the Z-axes.

FIG. 1

# METHOD AND APPARATUS FOR THE THREE-DIMENSIONAL PROCESSING

## BACKGROUND OF THE INVENTION

### 1. Field of the Invention

The present invention relates to a method and an apparatus for the three-dimensional processing of a workpiece by a machine tool such as a milling cutter.

### 2. Description of Related Art

Recently, various attempts at the three-dimensional processing using a computer have been made and put into practical use. Such a conventional method for the three-dimensional processing is primarily as follows: the information about each point on the X-, the Y-, and the Z-axes composing three dimensions is first stored in a computer; and based on the information read out of the computer, a cutter and a workpiece are moved for the processing (refer to Handbook of NC Machine Tools: published by Gijutsuhyoronsha).

However, in such a method, information to be stored in a computer becomes enormous, resulting in cumbersome data input and the need for a computer with a large capacity. Thus, a 16-bit and a 36-bit processors, which are relatively easy to handle, can not be used.

## SUMMARY OF THE INVENTION

Therefore, an object of the present invention is to provide a method and an apparatus which can allow the mechanical three-dimensional processing of a workpiece based on a relatively small amount of information.

In order to attain the above object, a method for the three-dimensional processing according to the present invention is characterized in that two-dimensional information on two axes corresponding to each point on the other axis is stored in memory means when a workpiece is subjected to the mechanical three-dimensional processing including the X-, the Y- and the Z-axes meeting at right angles to one another. The two-dimensional information is the information on many sections into which a workpiece in three dimensions is divided in an arbitrary axis. Further, an apparatus for the three-dimensional processing according to the present invention comprises a machine tool having drive means for moving a cutter and a work rest relatively in the direction of the X-, the Y- and the Z-axes; and control means which stores two-dimensional information on two axes corresponding to each point on the other axis and controls the drive means based on the stored information to move the cutter and the work rest in the direction of the X-, the Y-and the Z-axes.

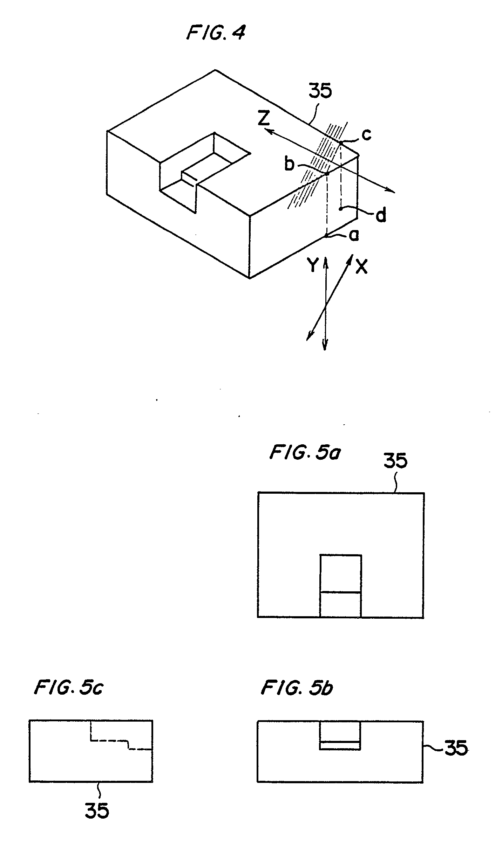

For example, when a workpiece 35 is subjected to the processing for the shape shown in Fig. 4, it is processed with the following steps. First, triangular projected plans of the workpiece 35 shown by Figs. 5a, 5b and 5c are stored into a computer, and a solid perspective figure as shown in Fig. 4 is displayed on a scope of the computer. Next, an axis (e.g., the Z-axis) is chosen arbitrarily, and the solid perspective figure is divided into sections in the chosen axis, the Z-axis. Thereby, two-dimensional information on the X- and the Y-axes can be attained for each of the sections into which the solid perspective figure is divided in the Z-axis at a certain density. Based on the two-dimensional information, the drive of the machine tool is controlled to move the cutter and the work rest to a specified point (X, Y, Z) for the processing of the workpiece 35.

According to the present invention, the three-dimensional information is transformed so as to be treated as two-dimensional information corresponding to each point on one axis. Therefore, compared with the conventional method of treating the three-dimensional information without any transformation, the amount of information is largely reduced, thereby facilitating the data input operation and allowing the use of a computer with a small capacity such as a 16-bit or a 32-bit computer. Of course, even in a case of using a computer with a large capacity, the data input operation can be performed easily.

## BRIEF DESCRIPTION OF THE DRAWINGS

These and other objects and features of the present invention will become apparent from the following description taken in conjunction with preferred embodiment thereof with reference to the accompanying drawings, in which:

Fig. 1 shows the general constitution of an apparatus according to the present invention;

Fig. 2 is a schematic flowchart showing a method according to the present invention;

Fig. 3 is a block diagram showing the circuit of a CPU;

Fig. 4 is a perspective view of a shape to be processed into;

    Figs. 5a, 5b and 5c are triangular projected plans of the shape shown in Fig. 4;

    Fig. 6 is a view to explain processing for a curved surface; and

    Fig. 7 is a plan view of another shape to be processed into.

## DETAILED DESCRIPTION OF THE PREFERRED EMBODIMENT

    A preferred embodiment of the present invention is described below referring to the accompanying drawings.

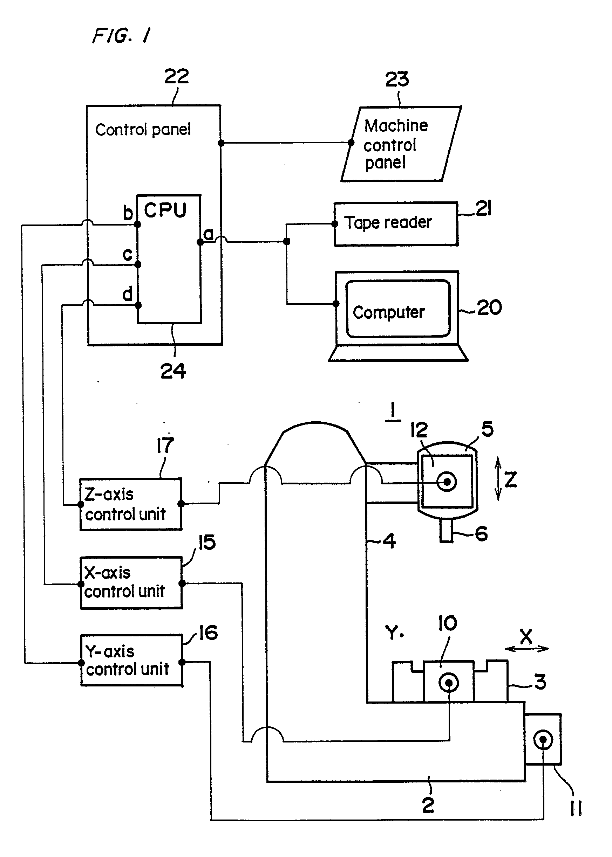

    Fig. 1 shows the general constitution of an apparatus according to the invention. A machine tool 1 comprises a table 3 mounted on a base 2 and a tool head 5 which has a cutter 6 and is attached to a column 4. The table 3 is moved in the directions of the X- and the Y-axes by an X-axis DC motor 10 and a Y-axis DC motor 11. The tool head 5 is moved in the direction of the Z-axis by a Z-axis DC motor 12. For the speed control of the table 3 and the tool head 5, control signals are outputted from control units 15, 16 and 17 to the motors 10, 11 and 12.

    The input/control system, on the other hand, comprises a 16-bit computer 20, a tape reader 21 and a control panel 22. The take reader 21 reads NC data specified by JIS (the Japanese Industrial Standards), in particular, G code as a program format. The control panel 22 has a machine control panel 23 and incorporates a CPU 24. The NC data read out of the computer 20 by the tape reader 21 is inputted into an input port a of the CPU 24. From output ports b, c and d of the CPU 24, the control signals are outputted to the above-mentioned control units 15, 16 and 17.

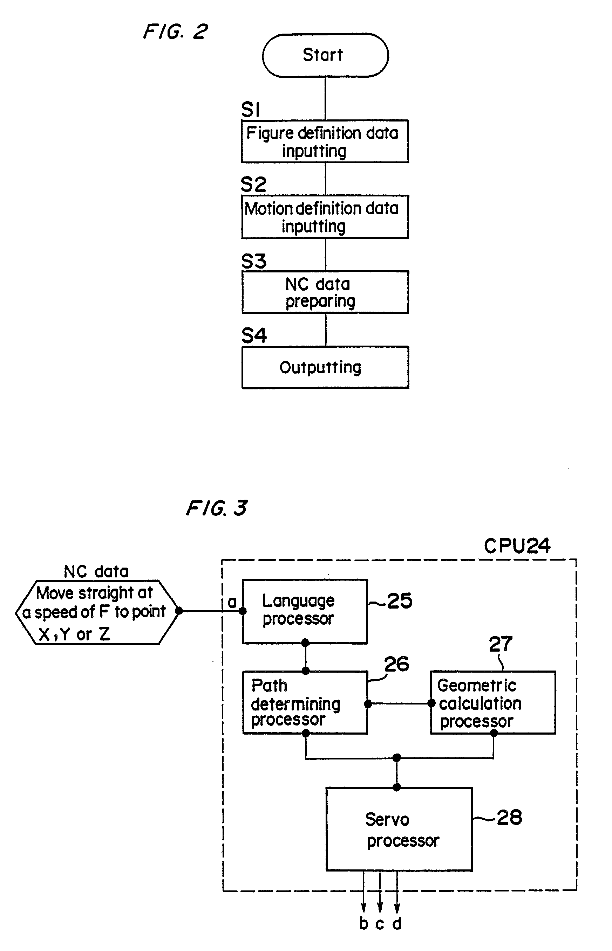

    As shown by the flowchart of Fig. 2, the computer 20 performs input of figure definition data (step S1) and input of motion definition data (step S2) to prepare the NC data (step S3). The data is inputted by means of a keyboard, a mouse and a tablet each of which is attached to the computer 20. The input of figure definition data is performed by storing data on the dimensions of the workpiece 35 as three plane figures as shown in Figs. 5a, 5b and 5c which are attained based on the triangular projection. In this moment, other data is added if necessary. The input of motion definition data is performed by drawing a solid perspective figure of the workpiece 35 viewed at an arbitrary angle based on the stored figure definition data, and the solid perspective figure is displayed on a scope of the computer 20. At this step S2, a solid perspective figure as shown in Fig. 4 can be attained by inputting data on the axis of revolution, the angle of revolution, etc. into the computer 20. Then, the solid perspective figure is divided into many sections as shown by fine line in an arbitrary axis, e.g., the Z-axis. Each of the sections has two-dimensional information shown on a coordinate whose axes are the X- and the Y- axes. The density of the division into sections can be set arbitrarily. In view of one section, as shown in Fig. 4, a place to be cut out can be defined based on two-dimensional information on the initial point a, middle points b, c, and the terminal point d. (In this case, the terminal point d is not necessary.) In a conventional method for the three-dimension processing, all the points on a locus passing through the points a, b, c and d have to be indicated in a three-dimensional coordinate system including the X-, the Y-and the Z-axes, so that a memory system with a large capacity is necessary. However, according to the present invention, only a small amount of two-dimensional information has to be stored in a memory system.

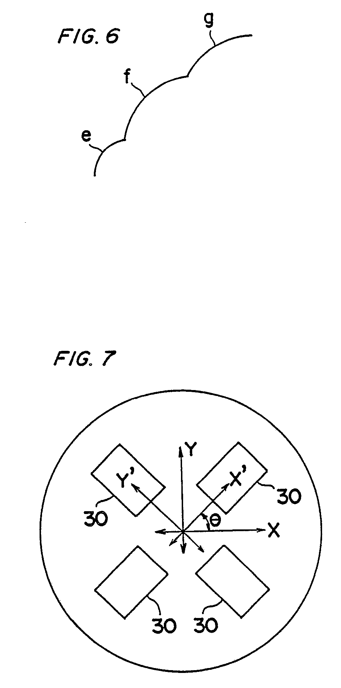

    Further, in a case of a curve as shown by Fig. 6, a circular arc is plotted by its points of contact or intersection, and a free curve is plotted by its nodal points.

    For example, a curve composed of circular arcs e, f and g as shown in Fig. 6 which have a common curvature is defined by two-dimensional information on the initial and terminal points for each of the circular arcs e, f and g. Also, when a curve stated by one expression shows on a section, the curve is defined by two-dimensional information on the initial and the terminal points and the expression stating the curve.

    On the other hand, in a case of a projection 30 with an inclination of $\theta$ relative to the X- or the Y-axis, as shown in Fig. 7, two-dimensional information corresponding to the Z-axis is first attained based on the $X'$- and the $Y'$-axes, and the angle of $\theta$ is then inputted, whereby the transformation of coordinate system is performed to obtain two-dimensional information based on the X- and the Y-axes.

    The two-dimensional information thus obtained is combined with the G code read by the tape reader 21 and inputted into the CPU 24 as the NC data.

    As shown in Fig. 3, the CPU 24, which has a language processor 25, a path determining processor 26, a geometric calculation processor 27 and a servo processor 28, can output control signals to the control units 15, 16 and 17 based on the inputted NC data to move the table 3 and the tool head 5 in the direction of the X-, the Y- and the Z-axes. The control signals outputted from the servo processor 28 are FM (feed magnet) signals, BM (before magnet) signals, PS (pulse start) signals and data signals. The motors 10, 11 and 12 are driven based on these signals via the control units 15, 16 and 17, whereby the table 3 and the cutter 6 are moved in the direction of the X-, the Y- and the Z-axes to cut a workpiece secured on the table 3 into a predetermined shape.

The control of the CPU 24 is based on a well-known NC control system, so that the detailed description is omitted.

In a conventional method, cutting is repeated pitch by pitch based on three-dimensional information, and only linear cutting is possible per pitch, so that the linear cutting is just repeated to cut a workpiece into a curve. However, in a processing method according to the present invention, unidirectional cutting is repeated a plurality of times pitch by pitch based on two-dimensional information, and the cutter 6 can be moved in a circular arc defined by two-dimensional information per section. Therefore, a curved surface processed in this method is smoother than that processed by a conventional cutting based on the accumulation of three-dimensional information.

Incidentally, the above description relates to a vertical type of machining center. A horizontal type of machining center can also employ the same control system. However, with the horizontal type, the Y-axis is served as a basis and the control is performed based on two-dimensional information on the X- and the Z-axes corresponding to the Y-axis.

Although the present invention has been described in connection with the preferred embodiment thereof, it is to be noted that various changes and modifications are apparent to those who are skilled in the art. Such changes and modifications are to be understood as included within the scope of the present invention as defined by the appended claims, unless they depart therefrom.

## Claims

1. A method for the three-dimensional processing wherein two-dimensional information is stored in memory means so as to subject a workpiece to the mechanical three-dimensional processing including the X-, the Y- and the Z-axes meeting at right angles to one another.

2. A method of controlling processing of a workpiece in three dimensions, comprising the steps of:
storing two-dimensional information for each of a plurality of sections of said workpiece that are of substantially uniform cross section in a third dimension; and
controlling said processing in three-dimensions based on said two-dimensional information.

3. An apparatus for subjecting a workpiece to the mechanical three-dimensional processing including the X-, the Y- and the Z-axes meeting at right angles to one another, which comprises:
a machine tool having drive means for moving a cutter and a work rest relatively in the directions of the X-, the Y- and the Z-axes; and
control means which stores two-dimensional information on two axes corresponding to each point on the other axis and controls said drive means based on said stored information to move said cutter and said work rest in the directions of the X-, the Y- and the Z-axes.

## FIG. 1

*FIG. 2*

```
        ┌─────────────┐
        │    Start    │
        └─────────────┘
               │
 S1   ┌──────────────────────┐
      │ Figure definition data│
      │      inputting         │
      └──────────────────────┘
               │
 S2   ┌──────────────────────┐
      │ Motion definition data│
      │      inputting         │
      └──────────────────────┘
               │
 S3   ┌──────────────────────┐
      │      NC data           │
      │      preparing         │
      └──────────────────────┘
               │
 S4   ┌──────────────────────┐
      │      Outputting        │
      └──────────────────────┘
```

*FIG. 3*

CPU24

NC data

Move straight at a speed of F to point X, Y or Z

a → Language processor ~25

Path determining processor ~26

Geometric calculation processor 27

Servo processor ~28

b c d

*FIG. 4*

*FIG. 5a*  35

*FIG. 5c*

35

*FIG. 5b*

35

*FIG. 6*

*FIG. 7*